# EUROPEAN PATENT APPLICATION

(11) **EP 4 647 279 A1**
(43) Date of publication of application: **12.11.2025**
(21) Application number: 23914573.3
(22) Date of filing: 28.12.2023
(51) Int. Cl.: B60K 1/02

(54) **POWER ASSEMBLY AND VEHICLE HAVING SAME**

(30) Priority: 05.01.2023 CN 202310020332; 05.01.2023 CN 202310014581
(71) Applicant: BYD Company Limited, Shenzhen, Guangdong 518118 (CN)
(72) Inventor: YANG, Shenglin, Shenzhen, Guangdong 518118 (CN); CHEN, Yong, Shenzhen, Guangdong 518118 (CN); GAO, Yuan, Shenzhen, Guangdong 518118 (CN); ZHANG, Hongming, Shenzhen, Guangdong 518118 (CN); WANG, Kuncheng, Shenzhen, Guangdong 518118 (CN); LU, Guoxiang, Shenzhen, Guangdong 518118 (CN)
(74) Representative: Mathys & Squire
(86) International application number: PCT/CN2023/142786
(87) International publication number: WO 2024/146441

(57) **Abstract**

Provided are a powertrain and a vehicle having the same. The powertrain includes an intermediate box (1), a motor controller (2) and a system function member. The intermediate box (1) is provided with two first electric control mounting seats (12) extending outward. The two first electric control mounting seats are configured to connect to a bottom surface of the motor controller. An accommodation space is defined between an outer wall surface of the intermediate box, the bottom surface of the motor controller, and the two first electric control mounting seats. The system function member is at least partially disposed in the accommodation space.

## Description

### CROSS-REFERENCE TO RELATED APPLICATIONS

This application claims priority to Patent Application No. 202310020332.5, filed on January 5, 2023 and entitled "POWERTRAIN AND VEHICLE HAVING SAME", and Patent Application No. 202310014581.3, filed on January 5, 2023 and entitled "POWERTRAIN AND VEHICLE HAVING SAME", which are incorporated herein by reference in their entireties.

### TECHNICAL FIELD

This application relates to power equipment, and in particular, to a powertrain. On this basis, this application further relates to a vehicle having the powertrain.

### BACKGROUND

With development of new energy technologies and deterioration of human living environments, new energy vehicles represented by electric vehicles are receiving increasing attention from people. Powertrains that are integrated with motors and reduction transmission apparatuses are among the key parts of electric vehicles. Technical requirements on, for example, high reliability, light weight and high space utilization, of the powertrains have important impact on overall performance of the electric vehicles.

However, because a large quantity of parts need to be integrated, existing powertrains have problems such as unreasonable spatial arrangement of parts, large size, and occupation of a large arrangement space, thereby severely restricting the promotion and application of the powertrains in electric vehicles and other related scenarios.

### SUMMARY

An objective of this application is to provide a powertrain. A spatial arrangement of parts in the powertrain is effectively optimized, and the powertrain has a compact structure, a neat appearance, and a high degree of integration.

To achieve the foregoing objective, according to a first aspect of this application, a powertrain is provided, including: a motor controller, an intermediate box, and a system function member. The intermediate box is provided with two first electric control mounting seats extending outward. The two first electric control mounting seats are configured to connect to a bottom surface of the motor controller. An accommodation space is defined between an outer wall surface of the intermediate box, the bottom surface of the motor controller, and the two first electric control mounting seats. The system function member is at least partially disposed in the accommodation space.

Optionally, an outer wall surface part, corresponding to the accommodation space, of the intermediate box is partially in a circular arc shape.

Optionally, the two first electric control mounting seats are separately fastened to the intermediate box, and extend from two lateral sides of the intermediate box in directions away from each other.

Optionally, the powertrain further includes two power components mounted opposite to each other. Each of the power components includes a motor, a transmission apparatus, and a power output shaft. A motor output shaft of the motor transmits a power to the power output shaft through the transmission apparatus.

Optionally, the system function member is a locking mechanism configured to be controlled so that powers of the two power components are coupled to or released from each other.

Optionally, the intermediate box is provided with a first mounting cavity and a second mounting cavity. The first mounting cavity is located between the two motors. The second mounting cavity is located below a longitudinal side of the first mounting cavity. Motor output shafts of the two motors separately extend into the first mounting cavity. At least a part of the power output shaft is mounted in the second mounting cavity.

Optionally, the motor controller is at least partially located on a longitudinal side of the first mounting cavity, and the motor controller is at least partially located above the second mounting cavity and mounted inclined to a horizontal plane.

Optionally, the intermediate box is further provided with a second electric control mounting seat. The second electric control mounting seat is located at a different height from the first electric control mounting seat and protrudes and extends from two lateral sides of a box part of the intermediate box that defines the first mounting cavity.

Optionally, a terminal block mounting cavity is disposed in the intermediate box. The terminal block mounting cavity is located between the two motors and above the first mounting cavity.

Optionally, the intermediate box is further provided with an intermediate partition extending in a longitudinal direction. The intermediate partition divides the first mounting cavity into a first left-half mounting cavity and a first right-half mounting cavity, and divides the second mounting cavity into a second left-half mounting cavity and a second right-half mounting cavity.

Optionally, the system function member is an oil cooler or an oil pump.

In the foregoing technical solution, according to the powertrain in this application, the system function member is disposed in the accommodation space defined by the outer wall surface of the intermediate box, the bottom surface of the motor controller, and the two first electric control mounting seats, thereby preventing the system function members from being exposed externally. A spatial arrangement of parts in the powertrain is optimized, and the powertrain has a compact structure and a neat appearance, improving a degree of integration.

Optionally, the powertrain further includes a first motor and a second motor. The first motor and the second motor are oppositely connected to the two lateral sides of the intermediate box.

A terminal block mounting cavity is disposed in the intermediate box. The terminal block mounting cavity is located between the first motor and the second motor and above a motor output shaft of the first motor and a motor output shaft of the second motor.

A first upper half opening, a second upper half opening, a first half cover plate, and a second half cover plate are formed on an upper side of the terminal block mounting cavity. The first upper half opening and the second upper half opening are disposed adjacent to each other in a longitudinal direction. The first half cover plate cooperates with a first mounting surface of the first upper half opening to close the first upper half opening. The second half cover plate cooperates with a second mounting surface of the second upper half opening to close the second upper half opening. The second mounting surface is higher than the first mounting surface.

Optionally, the motor output shaft of the first motor and the motor output shaft of the second motor are parallel to or coaxial with each other.

Optionally, the two lateral sides of the intermediate box are connected to a first motor box and a second motor box, respectively. The first motor and the second motor are correspondingly mounted in the first motor box and the second motor box, respectively.

Optionally, the first mounting surface and the second mounting surface are arranged in a folded-angle configuration with respect to each other.

Optionally, the second mounting surface is parallel to a horizontal plane, and/or the first mounting surface is disposed parallel to a lateral direction and disposed inclined to a longitudinal direction.

Optionally, the first half cover plate is provided with a power distribution connector. The power distribution connector includes a first electrical connection part facing the inside of the terminal block mounting cavity and a second electrical connection part facing the outside of the terminal block mounting cavity.

Optionally, a three-phase terminal block and a boost charging terminal block are mounted in the terminal block mounting cavity; or an integrated terminal block is mounted in the terminal block mounting cavity, and a three-phase terminal and a boost charging terminal are disposed on the integrated terminal block.

Optionally, a crossbeam is formed between the first upper half opening and the second upper half opening. The first half cover plate and the second half cover plate are separately disposed; or the first upper half opening is communicated with the second upper half opening, and the first half cover plate and the second half cover plate are integrally disposed.

Optionally, a first lateral opening and a second lateral opening are formed on two lateral sides of the terminal block mounting cavity, respectively. A wire of the first motor is adapted to pass through the first lateral opening into the terminal block mounting cavity. A wire of the second motor is adapted to pass through the second lateral opening into the terminal block mounting cavity.

Optionally, a longitudinal opening and a third cover plate are formed on a longitudinal side of the terminal block mounting cavity, and the third cover plate is configured to close the longitudinal opening.

Optionally, the powertrain further includes a transmission apparatus and a power output shaft. The motor output shaft of the first motor and the motor output shaft of the second motor transmit a power to the power output shaft through the transmission apparatus.

The intermediate box is further provided with a first mounting cavity and a second mounting cavity. The first mounting cavity is located between the first motor and the second motor and below the terminal block mounting cavity. The second mounting cavity is located below a longitudinal side of the first mounting cavity. The motor output shaft of the first motor and the motor output shaft of the second motor separately extend into the first mounting cavity. At least a part of the power output shaft is mounted in the second mounting cavity.

Optionally, the first mounting cavity includes a first left-half mounting cavity and a first right-half mounting cavity. The second mounting cavity includes a second left-half mounting cavity and a second right-half mounting cavity. The transmission apparatus includes a first transmission apparatus and a second transmission apparatus. The power output shaft includes a first power output shaft and a second power output shaft.

The first transmission apparatus is mounted in the first left-half mounting cavity and the second left-half mounting cavity, and the second transmission apparatus is mounted in the first right-half mounting cavity and the second right-half mounting cavity.

At least a part of the first power output shaft is mounted in the second left-half mounting cavity, and at least a part of the second power output shaft is mounted in the second right-half mounting cavity.

The motor output shaft of the first motor extends into the first left-half mounting cavity and transmits a power to the first power output shaft through the first transmission apparatus. The motor output shaft of the second motor extends into the first right-half mounting cavity and transmits a power to the second power output shaft through the second transmission apparatus.

Optionally, the intermediate box is further provided with an intermediate partition extending in a longitudinal direction. The first left-half mounting cavity and the first right-half mounting cavity are separated by the intermediate partition, and the second left-half mounting cavity and the second right-half mounting cavity are separated by the intermediate partition.

Optionally, the motor controller is mounted on the intermediate box, the motor controller is at least partially located on a longitudinal side of the first mounting cavity, and the motor controller is at least partially located above the second mounting cavity.

Optionally, the motor controller is mounted on the intermediate box inclined to a horizontal plane.

Optionally, the motor controller is mounted on the intermediate box through a second electric control mounting seat and a first electric control mounting seat that are disposed on the intermediate box. The second electric control mounting seat and the first electric control mounting seat are located at different heights.

Optionally, the second electric control mounting seat is integrally formed with the intermediate box and protrudes and extends from the two lateral sides of the box part of the intermediate box that defines the first mounting cavity;
and/or
the first electric control mounting seat is fastened to the intermediate box and protrudes and extends from two lateral sides of a box part of the intermediate box that defines the second mounting cavity.

Optionally, the second electric control mounting seat and the first electric control mounting seat are disposed so that the bottom surface of the motor controller is spaced from an outer wall surface of the second mounting cavity.

Optionally, the motor controller is provided with an electric control upper cover, and an arc-shaped structure that is recessed downward is formed on the electric control upper cover.

Optionally, a plurality of reinforcing ribs extending in a lateral direction and/or a plurality of reinforcing ribs extending in a longitudinal direction are formed on an outer side wall of the intermediate box.

In the foregoing technical solution, according to the powertrain in this application, a terminal block mounting cavity is formed between the first motor and the second motor. A first half cover plate and a second half cover plate that are mounted at different heights are formed in an upper side opening of the terminal block mounting cavity, thereby reducing occupation of a space above the terminal block mounting cavity, and saving a Z-direction space in the vehicle. Compared with a conventional arrangement, the powertrain has a more compact structure and high space utilization, and therefore, can be conveniently arranged in the vehicle.

According to a second aspect of this application, a vehicle provided with the foregoing powertrain is provided.

### BRIEF DESCRIPTION OF DRAWINGS

FIG. 1 is a diagram of a principle of transmission of a powertrain according to a preferred implementation of this application;
FIG. 2 is a diagram of a three-dimensional structure of a powertrain according to a preferred implementation of this application;
FIG. 3 is an exploded view of a powertrain in FIG. 2;
FIG. 4 is a top view of a powertrain in FIG. 2;
FIG. 5 is a left side view of a powertrain in FIG. 2;
FIG. 6 is a diagram of a three-dimensional structure of an intermediate box of a powertrain in FIG. 2;
FIG. 7 is a front view of an intermediate box in FIG. 6, where a three-phase terminal block cover plate and a boost charging terminal block cover plate are removed;
FIG. 8 is a top view of an intermediate box in FIG. 6, where a three-phase terminal block cover plate and a boost charging terminal block cover plate are removed; and
FIG. 9 is a right side view of an intermediate box in FIG. 6, where a three-phase terminal block cover plate and a boost charging terminal block cover plate are removed.

### Reference numerals

1: intermediate box; 1a: intermediate partition; 11: second electric control mounting seat; 12: first electric control mounting seat; 13: first mounting cavity; 131: first left-half mounting cavity; 132: first right-half mounting cavity; 14: second mounting cavity; 141: second left-half mounting cavity; 142: second right-half mounting cavity; 15: first half cover plate; 151: power distribution connector; 16: second half cover plate; 17: crossbeam; 18: third cover plate; 19: terminal block mounting cavity; 19a: first mounting surface; 19b: second mounting surface; 19c: second lateral opening; 19d: longitudinal opening; 2: motor controller; 21: arc-shaped structure; 3: first motor; 4: second motor; 5: three-phase terminal block; 6: boost charging terminal block; 7: locking mechanism; 8: gear position sensor; 9: electronic oil pump; 10: plate heat exchanger; 30: first motor box; 40: second motor box; 31, 41: motor output shaft; 50: first transmission apparatus; 60: second transmission apparatus; 51, 61: intermediate shaft; 70: first power output shaft; 80: second power output shaft.

### DESCRIPTION OF EMBODIMENTS

The following describes in detail specific implementations of this application with reference to the accompanying drawings. It will be understood that the specific implementations described herein are only used to illustrate and explain this application and are not intended to limit this application.

In this application, unless otherwise specified, directional terms such as "upper, lower, left, and right" generally refer to upper, lower, left, and right shown with reference to the accompanying drawings; and "inner and outer" refer to inner and outer with respect to an outline of each component itself. In this application, a directional term such as "Z direction" generally refers to a Z direction of a coordinate system of a vehicle in which a powertrain is located. That is, when the vehicle is in a stationary state on a horizontal road, an upper-lower direction of the vehicle is the Z direction. Accordingly, a directional term "lateral" that is used corresponds to a Y direction (namely, a left-right direction) of the vehicle, and a directional term "longitudinal" corresponds to an X direction (namely, a front-back direction) of the electric vehicle. It should be noted that correspondence between each of the directions described here and the coordinate system of the vehicle is only used to better understand this application, and does not indicate that the powertrain according to this application has been or is to be mounted in a vehicle, and the powertrain may also be used in other appropriate occasions. In view of this, this application may further determine "lateral" and "longitudinal" based on an axial direction of a motor output shaft in the powertrain, that is, "lateral" is the axial direction of the motor output shaft, and "longitudinal" is a horizontal direction perpendicular to the axial direction of the motor output shaft.

In addition, in the following description, terms such as "first" and "second", and the like are used only to facilitate clear description. Unless otherwise specified, these terms do not represent any differences between related structures or components.

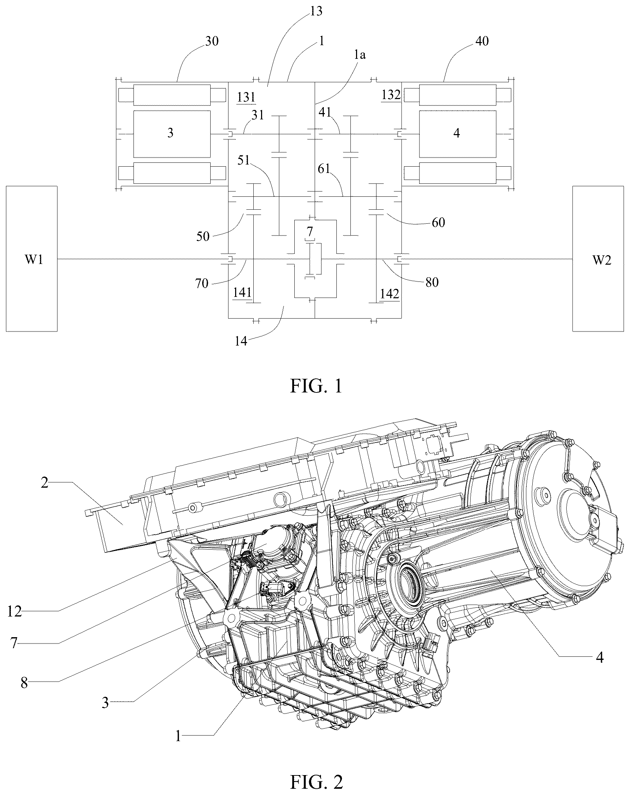

FIG. 1 is a diagram of a principle of transmission of a powertrain. The powertrain is integrated with a first motor 3 and a second motor 4. The first motor 3 and the second motor 4 are respectively connected to an intermediate box 1 defining a first mounting cavity 13 and a second mounting cavity 14, and are respectively in transmission connection to a left wheel W1 and a right wheel W2 through transmission apparatuses (for example, a plurality of gears) mounted in the first mounting cavity 13 and the second mounting cavity 14. The intermediate box 1 may be further provided with a locking mechanism 7 for locking or releasing a transmission path from the first motor 3 to the left wheel W1 and a transmission path from the second motor 4 to the right wheel W2. In this way, can be switched so that the first motor 3 and the second motor 4 drive the left wheel W1 and the right wheel W2 independently or synchronously. When the powertrain is disposed on a rear axle, the height of the powertrain should not be too large because a Z-direction space in the area is relatively limited.

To better understand this application, FIG. 1 further schematically shows a specific structure such as an intermediate box 1 and a transmission apparatus according to a preferred implementation. Specifically, two lateral sides of the intermediate box 1 may be connected to a first motor box 30 and a second motor box 40, respectively. The first motor box 30 and the second motor box 40 may be connected to two sides of the intermediate box 1 by fasteners such as bolts. The first motor 3 and the second motor 4 are correspondingly mounted in the first motor box 30 and the second motor box 40, respectively, to be assembled into a whole vehicle afterwards .

As described later, in the powertrain according to an optional implementation of this application, the intermediate box 1 is further provided with an intermediate partition 1a. The intermediate partition 1a divides a first mounting cavity 13 into a first left-half mounting cavity 131 and a first right-half mounting cavity 132, and divides a second mounting cavity 14 into a second left-half mounting cavity 141 and a second right-half mounting cavity 141. One end of each gear shaft (namely, motor output shafts 31, 41, intermediate shafts 51, 61, and power output shafts 70, 80) may be rotatably mounted to the intermediate partition 1a through a bearing. A motor output shaft 31 of the first motor 3 extends into the first left-half mounting cavity 131, and is in transmission connection to a first power output shaft 70 through a first transmission apparatus 50 disposed in the second left-half mounting cavity 141 to drive the left wheel W1 to rotate. A motor output shaft 41 of the second motor 4 extends into the first right-half mounting cavity 132, and is in transmission connection to a second power output shaft 80 through a second transmission apparatus 60 disposed in the second right-half mounting cavity 142 to drive the right wheel W2 to rotate. It should be noted that the foregoing description with reference to FIG. 1 is only used to facilitate overall understanding of a transmission path and a structural arrangement of the powertrain according to optional implementations of this application, and should not be limited to understanding that the powertrain according to this application must have all the foregoing components or structures.

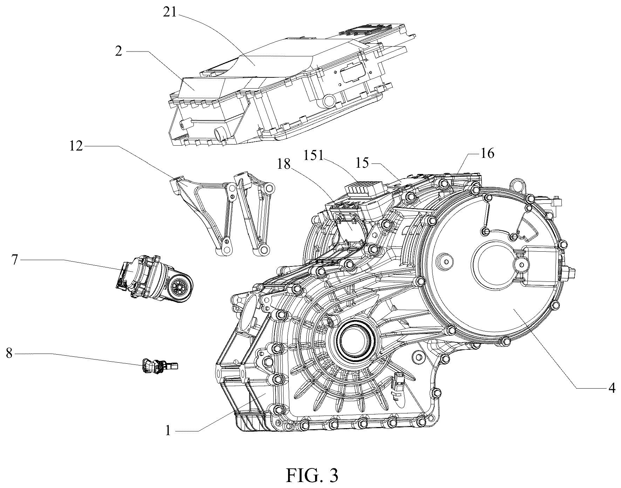

As shown in FIG. 1 and FIG. 2 to FIG. 9, a powertrain according to an optional implementation of this application includes an intermediate box 1, a motor controller 2 mounted on the intermediate box 1, and a system function member which is for example a locking mechanism 7. The intermediate box 1 is provided with two first electric control mounting seats 12 extending outward. The two first electric control mounting seats 12 are connected to a bottom surface of the motor controller 2, and an accommodation space is defined between an outer wall surface of the intermediate box 1, the bottom surface of the motor controller 2, and the two first electric control mounting seats 12. The system function member is at least partially disposed in the accommodation space.

In this way, in the powertrain according to this application, the first electric control mounting seat 12 extends outward, and the motor controller 2 is mounted on the first electric control mounting seat 12, so that at least a part of the bottom surface of the motor controller 2 is spaced from the outer wall surface of the intermediate box 1, thereby providing an accommodation space that can accommodate the system function member. In this case, the system function member is at least partially disposed in the accommodation space to prevent the system function members from being exposed externally, which is very beneficial for the powertrain that is developing in a direction of high integration. This not only effectively optimizes a spatial arrangement of the parts of the powertrain, but also allows the powertrain to have a more compact structure, a neater appearance and a higher degree of integration, and to be conveniently arranged in the vehicle.

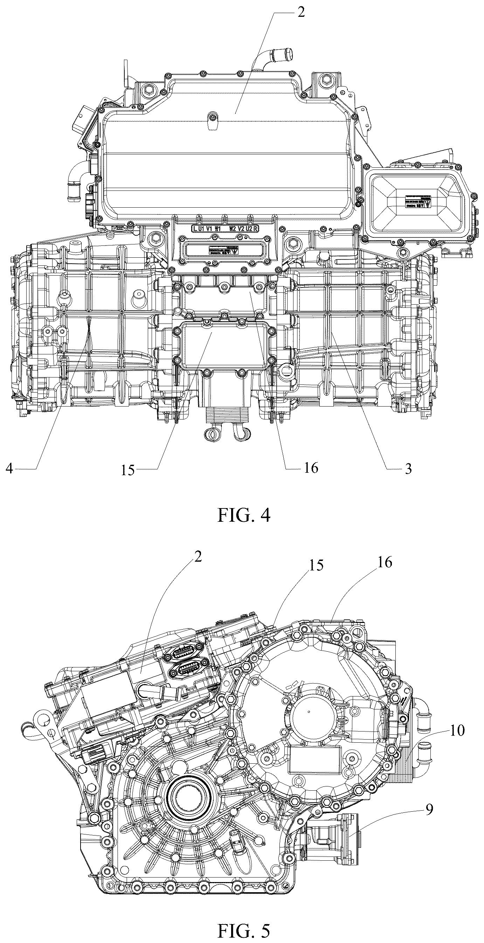

In an optional implementation, the powertrain according to this application may be disposed as a dual-motor drive assembly that is integrated with two power components, so that the vehicle has a series of significant advantages through four-wheel independent drive. For example, a smaller turning radius, an auxiliary ESP function, an auxiliary steering function, an auxiliary braking function, and the like can be achieved. Therefore, the powertrain has good control performance and high power performance. Specifically, each power component may include a motor, a transmission apparatus, and a power output shaft. A motor output shaft of the motor may transmit a power to the power output shaft through the transmission apparatus to drive a corresponding wheel to rotate. In an optional implementation shown in FIG. 1 to FIG. 4, motors in the two power components are disposed as a first motor 3 and a second motor 4, respectively. The first motor 3 and the second motor 4 are oppositely connected to the two lateral sides of the intermediate box 1. For example, from a perspective shown in FIG. 4, the first motor 3 is connected to a right side of the intermediate box 1, and the second motor 4 is connected to a left side of the intermediate box 1. The first motor and the second motor are opposite to each other.

The motor output shaft of the first motor 3 and the motor output shaft of the second motor 4 are disposed to be coaxial with each other to stably output balanced power and ensure mounting stability. In other implementations, the motor output shaft of the first motor 3 and the motor output shaft of the second motor 4 may be disposed to be parallel to (not coaxial with) each other. As mentioned above, to facilitate assembly, the two lateral sides of the intermediate box 1 may be connected to the first motor box 30 and the second motor box 40, respectively. The first motor 3 is mounted in the first motor box 30, and the motor output shaft of the first motor extends into the intermediate box 1. The second motor 4 is mounted in the second motor box 40, and the motor output shaft of the second motor extends into the intermediate box 1.

A terminal block mounting cavity 19 may be disposed in the intermediate box 1. The terminal block mounting cavity 19 is located between the first motor 3 and the second motor 4 and above the motor output shaft of the first motor 3 and the motor output shaft of the second motor, thereby making full use of a space in the intermediate box 1 that is located above the motor output shaft. More specifically, a first upper half opening and a second upper half opening that are disposed adjacent to each other in a longitudinal direction are formed on an upper side of the terminal block mounting cavity 19. The first upper half opening is provided with a first mounting surface 19a. A first half cover plate 15 is mounted on the first mounting surface 19a to close the first upper half opening. The second upper half opening is provided with a second mounting surface 19b. A second half cover plate 16 is mounted on the second mounting surface 19b to close the second upper half opening. To save a space above the intermediate box 1, the first mounting surface 19a is disposed to be lower than the second mounting surface 19b. For example, in optional implementations shown in FIG. 5, FIG. 6, FIG. 8 and FIG. 9, the first mounting surface 19a and the second mounting surface 19b are arranged in a folded-angle configuration with respect to each other, thereby forming an inverted V-shaped included angle between the first mounting surface and the second mounting surface. In this way, the first mounting surface 19a extends downward and inclined to a horizontal plane along a longitudinal direction far away from the second mounting surface 19b, thereby leaving a space above the first half cover plate 15 for arranging other components or structures, and helping reduce an overall height of the powertrain (or a dual-drive assembly). The second mounting surface 19b may be disposed to be parallel to a horizontal plane. The first mounting surface 19a may be disposed to be parallel to a lateral direction and extend inclined to a longitudinal direction. In other implementations, the first mounting surface 19a and the second mounting surface 19b may also be arranged in a stepped shape. That is, the first mounting surface 19a and the second mounting surface 19b are both formed to extend in a horizontal plane and are located at different heights. Similarly, the first mounting surface 19a may be lower than the second mounting surface 19b to reduce occupation of an upper space.

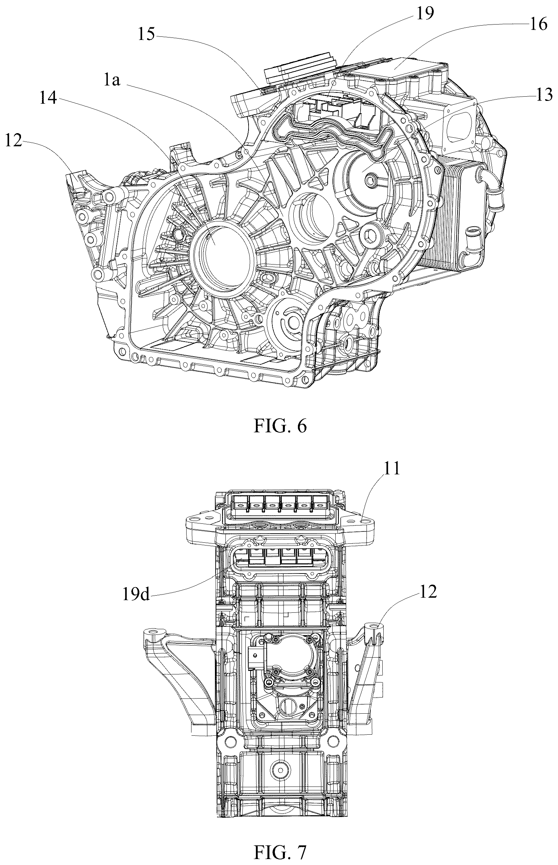

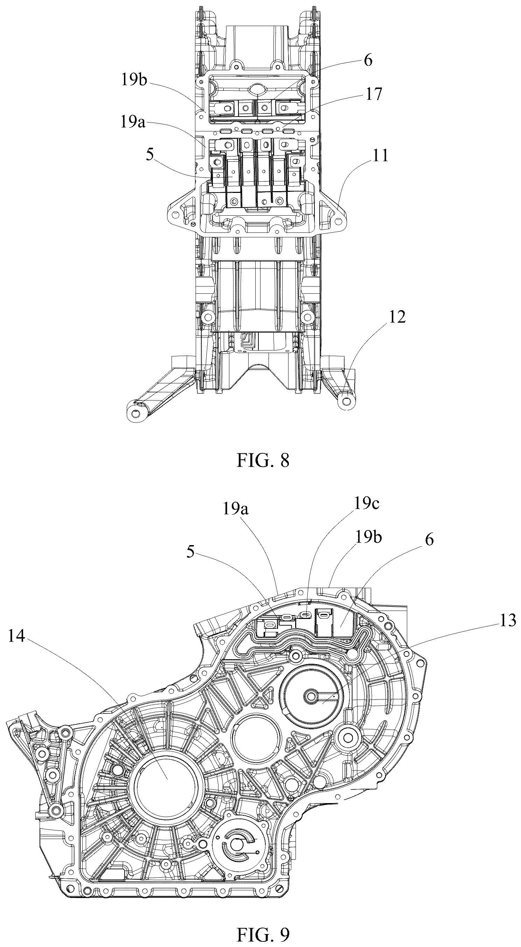

The powertrain according to this application may be further disposed to have a boost charging function. In view of this, a corresponding boost charging terminal block 6 needs to be disposed. As shown in FIG. 6 and FIG. 9, a three-phase terminal block 5 and a boost charging terminal block 6 are mounted in the terminal block mounting cavity 19 of the intermediate box 1, so that the three-phase terminal block 5 and the boost charging terminal block 6 are located above power output shafts of the first motor 3 and the second motor 4. As mentioned above, to facilitate assembly and disassembly, a first upper half opening and a second upper half opening may be formed on a top wall of the terminal block mounting cavity 19. The first upper half opening and the second upper half opening may be closed by the first half cover plate 15 and the second half cover plate 16, respectively. According to this cavity dividing design, in an assembly process, the three-phase terminal block 5 and the boost charging terminal block 6 may be assembled independently to facilitate operation in a small space, and further, different mounting surfaces can be used to position a corresponding terminal block cover plate, thereby helping accurately position its mounting positions. The first half cover plate 15 corresponding to the three-phase terminal block 5 may be provided with a power distribution connector 151. The power distribution connector 151 includes a first electrical connection part facing the inside of the terminal block mounting cavity 19 and a second electrical connection part facing the outside of the terminal block mounting cavity 19 to connect an external power supply to the three-phase terminal block 5 through the first half cover plate 15.

As an alternative implementation, an integrated terminal block may be mounted in the terminal block mounting cavity 19. A three-phase terminal and a boost charging terminal are disposed on the integrated terminal block. In this case, the first upper half opening and the second upper half opening may be disposed to communicate with each other to mount the integrated terminal block in the terminal block mounting cavity 19. In addition, although the first half cover plate 15 and the second half cover plate 16 are described, the first half cover plate and the second half cover plate may be disposed as a separate structure or an integral structure as required.

For example, to ensure rigidity of the intermediate box 1, a crossbeam 17 may be formed at a position in which mounting surfaces of the first half cover plate 15 and the second half cover plate 16 are adjacent to each other (namely, at a V-shaped folding line), so that the crossbeam 17 divides mounting cavities that are respectively configured to mount the three-phase terminal block 5 and the boost charging terminal block 6. In this case, the first half cover plate 15 and the second half cover plate 16 may be separately disposed. In addition, the first half cover plate 15 is used to close the first upper half opening, and the second half cover plate 16 is used to close the second upper half opening, so that the crossbeam 17 may be used to ensure positioning precision of a terminal block cover plate that is separately disposed. Alternatively, the first upper half opening and the second upper half opening may be disposed to communicate with each other. Accordingly, the first half cover plate 15 and the second half cover plate 16 may be integrally disposed. Furthermore, the three-phase terminal block 5 and the boost charging terminal block 6 may be arranged in a longitudinal direction with respect to each other, and the first half cover plate 15 and the second half cover plate 16 that are configured to close the three-phase terminal block and the boost charging terminal block in the terminal block mounting cavity 19 may be mounted in a non-coplanar manner with respect to each other.

An opening through which a line passes may also be formed on the intermediate box 1 to facilitate electrical or signal connection between different components. As shown in FIG. 6 and FIG. 9, a first lateral opening (not shown) and a second lateral opening 19c may be formed on two lateral sides of the terminal block mounting cavity 19, through which a wire such as a three-phase wire and a neutral wire of a motor passes to be connected to a terminal of a terminal block. Specifically, a wire of the first motor 3 is adapted to pass through the first lateral opening into the terminal block mounting cavity 19, and a wire of the second motor 4 is adapted to pass through the second lateral opening 19c into the terminal block mounting cavity 19, so that the wire of the first motor and the wire of the second motor can be separately connected to a terminal of a terminal block. In addition, a longitudinal opening 19d may also be formed on a longitudinal side of the terminal block mounting cavity 19. The longitudinal opening 19d is closed by a third cover plate 18 that is detachably connected to the intermediate box 1, so that the part that the longitudinal opening 19d faces may be mounted with a related part such as the motor controller 2 described later to open a terminal bolt of the motor controller 2 through the longitudinal opening 19d.

In a vehicle, the powertrain is configured to provide torque to a wheel to drive the wheel to rotate. In view of this, a transmission structure such as a gear may usually be disposed to be able to output torque and a rotational speed that are required. To conveniently arrange various transmission components and control components, a structure of the intermediate box 1 that serves as a bearing base needs to be reasonably disposed. In an optional implementation of this application, the intermediate box 1 may define a first mounting cavity 13 located between the first motor 3 and the second motor 4. The first mounting cavity 13 is located below the terminal block mounting cavity 19 (as shown in FIG. 6). Motor output shafts of the first motor 3 and the second motor 4 may separately extend into the first mounting cavity 13. The terminal block mounting cavity 19 is located between the first motor 3 and the second motor 4. In addition, the intermediate box 1 may further define a second mounting cavity 14 located below a longitudinal side of the first mounting cavity 13. The powertrain according to this application may include a transmission apparatus and a power output shaft that extends at least partially within the second mounting cavity 14. The motor output shaft of the first motor 3 and the motor output shaft of the second motor 4 may transmit a power to the power output shaft through the transmission apparatus. Therefore, a space between the first motor 3 and the second motor 4 not only provides a necessary space for a motor gear and other meshing transmission gears for each of the first motor and the second motor, but also reserves an arrangement space around the necessary space for arranging other related components (such as the foregoing terminal block mounting cavity 19, and the three-phase terminal block 5 and the boost charging terminal block 6 that are mounted in the foregoing terminal block mounting cavity). In addition, the first mounting cavity 13 and the second mounting cavity 14 are not stacked in a height direction (a Z direction), but are staggered from each other in a longitudinal direction so that the first mounting cavity and the second mounting cavity have an overlapping part in the height direction. This not only facilitates arrangement of transmission gears, but also effectively reduces an overall height of the powertrain and helps save a Z-direction space, so that the powertrain has compact Z-direction structural arrangement and high space utilization, and can be conveniently arranged in the vehicle.

More specifically, the intermediate box 1 may be provided with an intermediate partition 1a extending in a longitudinal direction, so that a component such as a transmission gear can be rotatably mounted in the intermediate box 1, and an overall mode and NVH performance of the intermediate box can be further improved. The first mounting cavity 13 may be divided into a first left-half mounting cavity 131 and a first right-half mounting cavity 132 by the intermediate partition 1a, and the second mounting cavity 14 may be divided into a second left-half mounting cavity 141 and a second right-half mounting cavity 142 by the intermediate partition 1a. The transmission apparatus includes a first transmission apparatus 50 and a second transmission apparatus 60. The first transmission apparatus 50 is mounted in the first left-half mounting cavity 131 and the second left-half mounting cavity 141. The second transmission apparatus 60 is mounted in the first right-half mounting cavity 132 and the second right-half mounting cavity 142. The power output shaft includes a first power output shaft 70 and a second power output shaft 80. At least a part of the first power output shaft 70 is mounted in the second left-half mounting cavity 141, and at least a part of the second power output shaft 80 is mounted in the second right-half mounting cavity 142. The motor output shaft 31 of the first motor 3 extends into the first left-half mounting cavity 131 and transmits a power to the first power output shaft 70 through the first transmission apparatus 50, thereby driving the left wheel W1 to rotate. The motor output shaft 41 of the second motor 4 extends into the first right-half mounting cavity 132 and transmits a power to the second power output shaft 80 through the second transmission apparatus 60, thereby driving the right wheel W2 to rotate.

In an optional powertrain according to this application, the motor controller 2 may be mounted on a longitudinal side of the intermediate box 1, and a terminal block mounting cavity 19 is formed above the first mounting cavity 13 between the first motor 3 and the second motor 4. A first mounting surface 19a and a second mounting surface 19b that have an inverted V-shaped included-angle configuration with respect to each other are formed in an upper side opening of the terminal block mounting cavity 19, thereby reducing or avoiding occupation of a space above the first mounting cavity, and saving a Z-direction space in the vehicle. Compared with a conventional arrangement, the powertrain has a more compact structure and high space utilization, and therefore, can be conveniently arranged in the vehicle. From a perspective shown in FIG. 5 and FIG. 9, the second mounting surface 19b is formed to extend generally in a horizontal plane, while the first mounting surface 19a extends downward and inclined from the second mounting surface 19b in a longitudinal direction. In this way, at least the first half cover plate mounted on the first mounting surface 19a may reduce occupation of the Z-direction space, and it is convenient to correspond to the motor controller 2 disposed on the longitudinal side of the intermediate box 1 that is described later.

As shown in FIG. 9, because the motor controller 2 is mounted above the longitudinal side of the intermediate box 1, the first mounting surface 19a for the first half cover plate 15 and the second mounting surface 19b for the second half cover plate 16 are allowed to be disposed at an angle to each other, thereby cleverly solving the problem of arranging a terminal block, allowing an overall structure to be more compact, and effectively reducing occupation of the Z-direction space.

Through the foregoing arrangement, on a longitudinal side of the first mounting cavity 13 that is connected to the second mounting cavity 14, the intermediate box 1 forms a recessed structure above the second mounting cavity 14. In this way, the motor controller 2 may be mounted to be at least partially located in the recessed structure, thereby avoiding or reducing occupation of height space. The motor controller 2 may be at least partially located on a longitudinal side of the first mounting cavity 13, and the motor controller 2 is at least partially located above the second mounting cavity 14. In this case, a cooling component such as an electronic oil pump 9 and a plate heat exchanger 10 may be arranged on the other longitudinal side of the intermediate box 1 (a right side from a perspective of FIG. 5) to cool a related component in a motor assembly (specifically a dual-motor assembly). In an optional implementation shown in FIG. 5, the electronic oil pump 9 is mounted on a box part corresponding to the second mounting cavity 14 and is located below the first mounting cavity 13, thereby making full use of a surrounding space. However, the plate heat exchanger 10 is mounted on a box part corresponding to the first mounting cavity 13, and is located at a relatively high position, thereby facilitating efficient heat exchange.

To make full use of an internal space defined by the intermediate box 1 and adapt to a circular area occupied by the transmission gear, a peripheral wall structure in a circular arc shape may be available, thereby forming an outer wall surface part in a circular arc shape. In an optional implementation, an outer wall surface part, corresponding to an accommodation space in which a system function member is disposed, of the intermediate box 1 may be disposed to be in a circular arc shape. In this way, when the motor controller 2 is mounted on the intermediate box 1 in a manner in which the motor controller is tangent to the outer wall surface part, a folded-angle space is formed between the motor controller 2 and the outer wall surface part. The folded-angle space may be used as the foregoing accommodation space for arranging the system function member, and there is no need to specifically dispose the motor controller 2 to be spaced apart from the outer wall surface of the intermediate box 1, thereby effectively improving a degree of integration of a system.

The two first electric control mounting seats 12 that are configured to connect to the motor controller 2 may be disposed to extend in directions away from each other, thereby providing a larger space for mounting the motor controller 2, and helping support the motor controller 2 more stably. In general, the intermediate box 1 may be a casting. Considering that arrangement of the first electric control mounting seat 12 may increase casting difficulty, the two first electric control mounting seats 12 may be separately fastened to the intermediate box 1 by bolts or the like, and protrude and extend from two lateral sides of a box part of the intermediate box that defines the second mounting cavity 14. Through the arrangement, a mounting base that meets mounting needs of the motor controller 2 can be provided without significantly increasing casting difficulty, so that the motor controller 2 can be firmly fixed even if the motor controller is arranged above the longitudinal side of the intermediate box 1. In addition, it is convenient to dispose the motor controller so that a bolt for fixing the motor controller 2 carries out a fastening operation from top to bottom.

In addition, the intermediate box 1 may be provided with a second electric control mounting seat 11. As shown in FIG. 6 to FIG. 9, the height of the second electric control mounting seat 11 is higher than the height of the first electric control mounting seat 12. In this way, the second electric control mounting seat 11 and the first electric control mounting seat 12 may be used to mount the motor controller 2 on the intermediate box 1 inclined to a horizontal plane. In addition, the second electric control mounting seat 11 and the second electric control mounting seat provide a plurality of mounting points at different heights, so that mounting precision of the motor controller 2 on the intermediate box 1 may be effectively ensured. As shown in FIG. 6 to FIG. 8, in an optional implementation, the second electric control mounting seat 11 may be integrally formed with the intermediate box 1, for example, integrally cast. More specifically, the second electric control mounting seat 11 protrudes and extends from two lateral sides of a box part of the intermediate box 1 that defines the first mounting cavity 13, thereby providing a relatively high mounting point.

As mentioned above, the system function member that is at least partially disposed in the accommodation space may be a locking mechanism 7 mounted on the intermediate box 1. The locking mechanism 7 may protrude and extend from the outer wall surface of the intermediate box 1, and the protruding part extends to a space between the bottom surface of the motor controller 2 and the outer wall surface of the intermediate box 1, and can be controlled so that powers of the two power components are coupled to or released from each other. Therefore, the foregoing space between the motor controller 2 and the intermediate box 1 provides a clearance space for protruding parts of a box mounting member, thereby preventing the protruding parts from being exposed externally, and achieving a compact structure and a neat appearance.

In addition to the locking mechanism 7 that is configured to switch a driving manner, the system function member according to this application may alternatively be other function components disposed on the intermediate box 1. The components may protrude from the surface of the intermediate box 1, and a protruding part is located in the space between the motor controller 2 and the intermediate box 1. In an illustrated optional implementation, a gear position sensor 8 that protrudes from an outer wall surface of the second mounting cavity and extends into a space between the motor controller 2 and the second mounting cavity 14 is mounted on a wall of the second mounting cavity 14. In this way, the powertrain is integrated with more function components with a relatively compact structure and a neat appearance, thereby facilitating intelligent control. Alternatively, the system function member may be an oil cooler, an oil pump, or the like.

As shown in FIG. 2 to FIG. 5, in the powertrain provided in this application, the motor controller 2 may be disposed to use a special-shaped flat structure. The motor controller is provided with an electric control upper cover, and an arc-shaped structure 21 that is recessed downward may be formed on the electric control upper cover, thereby not only reducing occupation of the Z-direction space, but also improving a mode of the upper cover through the arc-shaped structure 21.

In the powertrain of an optional implementation, because the first motor 3 and the second motor 4 rotate independently of each other, a higher lateral mode is required. In view of this, a large quantity of reinforcing ribs extending in a lateral direction may be disposed on the intermediate box 1, thereby having higher NVH performance. In addition, the intermediate box 1 is formed in an oblique shape in a longitudinal direction and is provided with a recessed structure. To improve a longitudinal mode and NVH performance of the intermediate box, a plurality of reinforcing ribs extending in a longitudinal direction may also be formed on the intermediate box 1.

As shown in FIG. 1 and FIG. 2 to FIG. 9, the powertrain according to an optional implementation of this application includes an intermediate box 1, and a first motor 3 and a second motor 4 that are separately connected to the intermediate box 1. The first motor 3 and the second motor 4 are oppositely connected to the two lateral sides of the intermediate box 1. For example, from a perspective shown in FIG. 4, the first motor 3 is connected to a right side of the intermediate box 1, and the second motor 4 is connected to a left side of the intermediate box 1. The first motor and the second motor are opposite to each other.

In optional implementations shown in FIG. 2 to FIG. 4, the motor output shaft of the first motor 3 and the motor output shaft of the second motor 4 are disposed to be coaxial with each other to stably output balanced power and ensure mounting stability. In other implementations, the motor output shaft of the first motor 3 and the motor output shaft of the second motor 4 may be disposed to be parallel to (not coaxial with) each other.

As mentioned above, to facilitate assembly, the two lateral sides of the intermediate box 1 may be connected to the first motor box 30 and the second motor box 40, respectively. The first motor 3 is mounted in the first motor box 30, and the motor output shaft of the first motor extends into the intermediate box 1. The second motor 4 is mounted in the second motor box 40, and the motor output shaft of the second motor extends into the intermediate box 1.

The intermediate box 1 may be provided with a second electric control mounting seat 11 and a first electric control mounting seat 12 that are located at different heights. As shown in FIG. 6 to FIG. 9, the height of the second electric control mounting seat 11 is higher than the height of the first electric control mounting seat 12. In this way, the second electric control mounting seat 11 and the first electric control mounting seat 12 may be used to mount the motor controller 2 on the intermediate box 1 inclined to a horizontal plane. In addition, the second electric control mounting seat 11 and the first electric control mounting seat 12 provide a plurality of mounting points at different heights, so that mounting precision of the motor controller 2 on the intermediate box 1 may be effectively ensured.

As shown in FIG. 6 to FIG. 8, the first electric control mounting seat 12 may be connected to the two lateral sides of a box part of the intermediate box 1 that defines the second mounting cavity 14 by fasteners such as bolts, thereby providing a mounting point for the motor controller 2 at a relatively low position. Through the arrangement, a mounting base that meets mounting needs of the motor controller 2 can be provided without significantly increasing casting difficulty, so that the motor controller 2 can be firmly fixed even if the motor controller is arranged above the longitudinal side of the intermediate box 1. In addition, it is convenient to dispose the motor controller so that a bolt for fixing the motor controller 2 carries out a fastening operation from top to bottom.

As mentioned above, in a case where the first mounting cavity 13 and the second mounting cavity 14 are formed, the motor controller 2 may be mounted in the recessed structure above the second mounting cavity 14. The second electric control mounting seat 11 and the first electric control mounting seat 12 are disposed, so that the motor controller 2 may be mounted in such a way that the bottom surface of the motor controller is spaced from an outer wall surface of the second mounting cavity 14. In this way, there is a specific space between the bottom surface of the motor controller 2 and the intermediate box 1. In this way, in use, when the motor controller 2 generates heat and expands, the space may provide an expansion margin with respect to the intermediate box 1, while further allowing airflow to pass through the space for cooling.

In addition, the powertrain is usually further provided with other control/sensing components. The components protrude from a surface of the intermediate box 1. The foregoing space between the motor controller 2 and the intermediate box 1 provides a clearance space for a protruding part of the components. With reference to FIG. 2, FIG. 3 and FIG. 6, a locking mechanism 7 and a gear position sensor 8 that protrude from an outer wall surface of the second mounting cavity and extend into the space between the motor controller 2 and the second mounting cavity 14 are mounted on the wall of the second mounting cavity 14. In this way, the powertrain is integrated with more function components with a relatively compact structure and a neat appearance, thereby facilitating intelligent control.

This application further provides a vehicle provided with the foregoing powertrain.

Preferred implementations of this application are described in detail above with reference to the accompanying drawings. However, this application is not limited thereto. Within the technical concept of this application, a variety of simple variations may be made to the technical solution of this application, including combining various specific technical features in any suitable manner. To avoid unnecessary repetition, this application does not further explain various possible combinations. However, these simple variations and combinations should also be considered as the content disclosed by this application, and all the simple variations and combinations shall fall within the protection scope of this application.

## Claims

1. A powertrain, comprising:
a motor controller (2);
an intermediate box (1), wherein the intermediate box (1) is provided with two first electric control mounting seats (12) extending outward, the two first electric control mounting seats (12) are configured to connect to a bottom surface of the motor controller (2), and an accommodation space is defined between an outer wall surface of the intermediate box (1), the bottom surface of the motor controller (2), and the two first electric control mounting seats (12); and
a system function member, wherein the system function member is at least partially disposed in the accommodation space.

2. The powertrain according to claim 1, wherein an outer wall surface part, corresponding to the accommodation space, of the intermediate box (1) is partially in a circular arc shape.

3. The powertrain according to claim 1 or 2, wherein the two first electric control mounting seats (12) are separately fastened to the intermediate box (1), and extend from two lateral sides of the intermediate box (1) in directions away from each other.

4. The powertrain according to any one of claims 1 to 3, wherein the powertrain further comprises two power components mounted opposite to each other, each of the power components comprises a motor, a transmission apparatus, and a power output shaft, and a motor output shaft of the motor transmits a power to the power output shaft through the transmission apparatus.

5. The powertrain according to claim 4, wherein the system function member is a locking mechanism (7) configured to be controlled so that powers of the two power components are coupled to or released from each other.

6. The powertrain according to claim 4 or 5, wherein the intermediate box (1) is provided with a first mounting cavity (13) and a second mounting cavity (14), the first mounting cavity (13) is located between the two motors, the second mounting cavity (14) is located below a longitudinal side of the first mounting cavity (13), motor output shafts of the two motors separately extend into the first mounting cavity (13), and at least a part of the power output shaft is mounted in the second mounting cavity (14).

7. The powertrain according to claim 6, wherein the motor controller (2) is at least partially located on a longitudinal side of the first mounting cavity (13), and the motor controller (2) is at least partially located above the second mounting cavity (14) and mounted inclined to a horizontal plane.

8. The powertrain according to claim 6 or 7, wherein the intermediate box (1) is further provided with a second electric control mounting seat (11), and the second electric control mounting seat (11) is located at a different height from the first electric control mounting seat (12) and protrudes and extends from two lateral sides of a box part of the intermediate box (1) that defines the first mounting cavity (13).

9. The powertrain according to any one of claims 6 to 8, wherein a terminal block mounting cavity (19) is disposed in the intermediate box (1), and the terminal block mounting cavity (19) is located between the two motors and above the first mounting cavity (13).

10. The powertrain according to any one of claims 6 to 9, wherein the intermediate box (1) is further provided with an intermediate partition (1a) extending in a longitudinal direction, and the intermediate partition (1a) divides the first mounting cavity (13) into a first left-half mounting cavity (131) and a first right-half mounting cavity (132), and divides the second mounting cavity (14) into a second left-half mounting cavity (141) and a second right-half mounting cavity (142).

11. The powertrain according to any one of claims 1 to 10, wherein the system function member is an oil cooler or an oil pump.

12. The powertrain according to any one of claims 1 to 3, further comprising:
a first motor (3) and a second motor (4), wherein the first motor (3) and the second motor (4) are oppositely connected to the two lateral sides of the intermediate box (1), wherein
a terminal block mounting cavity (19) is disposed in the intermediate box (1), and the terminal block mounting cavity (19) is located between the first motor and the second motor and above a motor output shaft of the first motor and a motor output shaft of the second motor; and
a first upper half opening, a second upper half opening, a first half cover plate (15), and a second half cover plate (16) are formed on an upper side of the terminal block mounting cavity (19), the first upper half opening and the second upper half opening are disposed adjacent to each other in a longitudinal direction, the first half cover plate (15) cooperates with a first mounting surface (19a) of the first upper half opening to close the first upper half opening, the second half cover plate (16) cooperates with a second mounting surface (19b) of the second upper half opening to close the second upper half opening, and the second mounting surface (19b) is higher than the first mounting surface (19a).

13. The powertrain according to claim 12, wherein the motor output shaft of the first motor (3) and the motor output shaft of the second motor (4) are parallel to or coaxial with each other.

14. The powertrain according to claim 12 or 13, wherein the two lateral sides of the intermediate box (1) are connected to a first motor box (30) and a second motor box (40), respectively, and the first motor (3) and the second motor (4) are correspondingly mounted in the first motor box (30) and the second motor box (40), respectively.

15. The powertrain according to any one of claims 12 to 14, wherein the first mounting surface (19a) and the second mounting surface (19b) are arranged in a folded-angle configuration with respect to each other.

16. The powertrain according to claim 15, wherein the second mounting surface (19b) is parallel to a horizontal plane, and/or the first mounting surface (19a) is disposed parallel to a lateral direction and disposed inclined to a longitudinal direction.

17. The powertrain according to any one of claims 12 to 16, wherein the first half cover plate (15) is provided with a power distribution connector (151), and the power distribution connector (151) comprises a first electrical connection part facing the inside of the terminal block mounting cavity (19) and a second electrical connection part facing the outside of the terminal block mounting cavity (19).

18. The powertrain according to any one of claims 12 to 17, wherein a three-phase terminal block (5) and a boost charging terminal block (6) are mounted in the terminal block mounting cavity (19);
or
an integrated terminal block is mounted in the terminal block mounting cavity (19), and a three-phase terminal and a boost charging terminal are disposed on the integrated terminal block.

19. The powertrain according to any one of claims 12 to 18, wherein a crossbeam (17) is formed between the first upper half opening and the second upper half opening, and the first half cover plate (15) and the second half cover plate (16) are separately disposed;
or
the first upper half opening is communicated with the second upper half opening, and the first half cover plate (15) and the second half cover plate (16) are integrally disposed.

20. The powertrain according to any one of claims 12 to 19, wherein a first lateral opening and a second lateral opening (19c) are formed on two lateral sides of the terminal block mounting cavity (19), respectively, a wire of the first motor (3) is adapted to pass through the first lateral opening into the terminal block mounting cavity (19), and a wire of the second motor (4) is adapted to pass through the second lateral opening (19c) into the terminal block mounting cavity (19).

21. The powertrain according to any one of claims 12 to 20, wherein a longitudinal opening (19d) and a third cover plate (18) are formed on a longitudinal side of the terminal block mounting cavity (19), and the third cover plate (18) is configured to close the longitudinal opening (19d).

22. The powertrain according to any one of claims 12 to 21, further comprising a transmission apparatus and a power output shaft, wherein the motor output shaft of the first motor (3) and the motor output shaft of the second motor (4) transmit a power to the power output shaft through the transmission apparatus; and
the intermediate box (1) is further provided with a first mounting cavity (13) and a second mounting cavity (14), the first mounting cavity (13) is located between the first motor (3) and the second motor (4) and below the terminal block mounting cavity (19), the second mounting cavity (14) is located below a longitudinal side of the first mounting cavity (13), the motor output shaft of the first motor (3) and the motor output shaft of the second motor (4) separately extend into the first mounting cavity (13), and at least a part of the power output shaft is mounted in the second mounting cavity (14).

23. The powertrain according to claim 22, wherein the first mounting cavity (13) comprises a first left-half mounting cavity (131) and a first right-half mounting cavity (132), the second mounting cavity (14) comprises a second left-half mounting cavity (141) and a second right-half mounting cavity (142), the transmission apparatus comprises a first transmission apparatus (50) and a second transmission apparatus (60), and the power output shaft comprises a first power output shaft (70) and a second power output shaft (80);
the first transmission apparatus (50) is mounted in the first left-half mounting cavity (131) and the second left-half mounting cavity (141), and the second transmission apparatus (60) is mounted in the first right-half mounting cavity (132) and the second right-half mounting cavity (142);
at least a part of the first power output shaft (70) is mounted in the second left-half mounting cavity (141), and at least a part of the second power output shaft (80) is mounted in the second right-half mounting cavity (142); and
the motor output shaft of the first motor (3) extends into the first left-half mounting cavity (131) and transmits a power to the first power output shaft (70) through the first transmission apparatus (50), and the motor output shaft of the second motor (3) extends into the first right-half mounting cavity (132) and transmits a power to the second power output shaft (80) through the second transmission apparatus (60).

24. The powertrain according to claim 23, wherein the intermediate box (1) is further provided with an intermediate partition (1a) extending in a longitudinal direction, the first left-half mounting cavity (131) and the first right-half mounting cavity (132) are separated by the intermediate partition (1a), and the second left-half mounting cavity (141) and the second right-half mounting cavity (141) are separated by the intermediate partition (1a).

25. The powertrain according to any one of claims 22 to 24, wherein the motor controller (2) is mounted on the intermediate box (1), the motor controller (2) is at least partially located on a longitudinal side of the first mounting cavity (13), and the motor controller (2) is at least partially located above the second mounting cavity (14).

26. The powertrain according to claim 25, wherein the motor controller (2) is mounted on the intermediate box (1) inclined to a horizontal plane.

27. The powertrain according to claim 26, wherein the motor controller (2) is mounted on the intermediate box (1) through a second electric control mounting seat (11) and a first electric control mounting seat (12) that are disposed on the intermediate box (1), wherein the second electric control mounting seat (11) and the first electric control mounting seat (12) are located at different heights.

28. The powertrain according to claim 27, wherein the second electric control mounting seat (11) is integrally formed with the intermediate box (1) and protrudes and extends from two lateral sides of a box part of the intermediate box (1) that defines the first mounting cavity (13);
and/or
the first electric control mounting seat (12) is fastened to the intermediate box (1) and protrudes and extends from two lateral sides of a box part of the intermediate box (1) that defines the second mounting cavity (14).

29. The powertrain according to claim 27 or 28, wherein the second electric control mounting seat (11) and the first electric control mounting seat (12) are disposed so that the bottom surface of the motor controller (2) is spaced from an outer wall surface of the second mounting cavity (14).

30. The powertrain according to any one of claims 25 to 29, wherein the motor controller (2) is provided with an electric control upper cover, and an arc-shaped structure (21) that is recessed downward is formed on the electric control upper cover.

31. The powertrain according to any one of claims 12 to 30, wherein a plurality of reinforcing ribs extending in a lateral direction and/or a plurality of reinforcing ribs extending in a longitudinal direction are formed on an outer side wall of the intermediate box (1).

32. A vehicle, wherein the vehicle is provided with the powertrain according to any one of claims 1 to 31.
